# EUROPEAN PATENT APPLICATION

(11) **EP 4 401 495 A1**
(43) Date of publication of application: **17.07.2024**
(21) Application number: 21955589.3
(22) Date of filing: 06.09.2021
(51) Int. Cl.: H04W 72/12, H04W 72/04

(54) **METHOD AND APPARATUS FOR DETERMINING TIME OFFSET**

(71) Applicant: Beijing Xiaomi Mobile Software Co., Ltd., Beijing 100085 (CN)
(72) Inventor: ZHU, Yajun, Beijing 100085 (CN)
(74) Representative: Hughes, Andrea Michelle
(86) International application number: PCT/CN2021/116797
(87) International publication number: WO 2023/029058

(57) **Abstract**

A method and apparatus for determining a time offset, capable of being applied to the technical field of communications. The method executed by a terminal device (12) comprises: determining a first time offset currently for a beam or a user group according to the value of a radio network temporary identifier TC-RNTI in a message 2 MSG2 (21). Therefore, the terminal device (12) can determine the first time offset for the beam or the user group according to the value of the TC-RNTI to compensate for data transmitted between the terminal device (12) and a network device (11), so that the problem of inaccurate timing relationship adjustment between the terminal device (12) and the network device (11) due to the high-speed movement of a satellite (13) is solved, and the reliability of data interaction is ensured.

## Description

### TECHNICAL FIELD

The present disclosure relates to the field of communication technology and, in particular, to a method for determining a time offset and a device for determining a time offset.

### BACKGROUND

With the development of wireless communication technology, satellite communication becomes an important direction for the future development of wireless communication technology. In satellite communication scenarios, the existence of a long signal transmission distance between a sending end and a receiving end results in a large time delay in the data transmission process. Moreover, each satellite can provide multiple beams, and different beams cover different areas, and in the case where a cell contains multiple beams, the transmission delay of each beam is different. Therefore, how to determine a time offset between a terminal and a network device when the satellite is moving at high speed has become an important research direction at present.

### SUMMARY

Embodiments of the present disclosure provide a method for determining a time offset and a device for determining a time offset, which may be applied in the field of communication technology.

In a first aspect, embodiments of the present disclosure provide a method for determining a time offset. The method is performed by a terminal and includes: determining, based on a value of a temporary cell-radio network temporary identifier (TC-RNTI) in a message 2 (MSG2), a first time offset specific for a current beam or a first time offset specific for a user group.

Optionally, determining the first time offset specific for the current beam or the first time offset specific for the user group based on the value of the TC-RNTI in the MSG2 includes:
determining, based on a correspondence between the TC-RNTI and the first time offset, the first time offset corresponding to the value of the TC-RNTI in the MSG2.

Optionally, the determining based on the correspondence between the TC-RNTI and the first time offset includes:
determining the correspondence between the TC-RNTI and the first time offset according to a protocol agreement; or
determining the correspondence between the TC-RNTI and the first time offset according to an indication of a network device.

Optionally, the method further includes:
determining whether a network device supports the first time offset specific for the beam or the first time offset specific for the user group.

Optionally, determining whether the network device supports the first time offset specific for the beam or the first time offset specific for the user group includes:
determining, based on a value of a designated information field in system information, whether the network device supports the first time offset specific for the beam or the first time offset specific for the user group; or
determining, based on a value of a reserved information field in the MSG2, whether the network device supports the first time offset specific for the beam or the first time offset specific for the user group.

Optionally, the first time offset is any one of:
a time difference between an uplink transmission and a downlink transmission; or
a number of predefined time units between an uplink transmission and a downlink transmission.

In a second aspect, embodiments of the present disclosure provide another method for determining a time offset. The method is performed by a network device and includes: determining, based on a first time offset specific for a current beam or a first time offset specific for a user group, a value of a temporary cell-radio network temporary identifier (TC-RNTI) in a message 2 (MSG2).

Optionally, determining the value of the TC-RNTI in the MSG2 based on the first time offset specific for the current beam or the first time offset specific for the user group includes:
determining, based on a correspondence between the TC-RNTI and the first time offset, the value of the TC-RNTI in the MSG2 corresponding to the current first time offset.

Optionally, the determining based on the correspondence between the TC-RNTI and the first time offset includes:
determining the correspondence between the TC-RNTI and the first time offset according to a protocol agreement.

Optionally, the method further includes:
indicating to a terminal whether the network device supports the first time offset specific for the beam or the first time offset specific for the user group.

Optionally, indicating to the terminal whether the network device supports the first time offset specific for the beam or the first time offset specific for the user group includes:
indicating, through a designated information field in system information, to the terminal whether the network device supports the first time offset specific for the beam or the first time offset specific for the user group; or
indicating, through a reserved information field in the MSG2, to the terminal whether the network device supports the first time offset specific for the beam or the first time offset specific for the user group.

Optionally, the first time offset is any one of:
a time difference between an uplink transmission and a downlink transmission; or
a number of predefined time units between an uplink transmission and a downlink transmission.

In a third aspect, embodiments of the present disclosure provide a communication device that has some or all of the functions of the terminal for implementing the method described in the first aspect above. For example, the functions of the communication device may have functions in some or all of the embodiments of the present disclosure, or the communication device may have functions to separately implement any one of the embodiments of the present disclosure. These functions may be implemented by hardware or by hardware executing corresponding software. The hardware or software includes one or more units or modules corresponding to these functions.

In a fourth aspect, embodiments of the present disclosure provide another communication device that has some or all of the functions of the network device for implementing the method embodiment described in the second aspect above. For example, the functions of the communication device may have functions in some or all of the embodiments of the present disclosure, or the communication device may have functions to separately implement any one of the embodiments of the present disclosure. These functions may be implemented by hardware or by hardware executing corresponding software. The hardware or software includes one or more units or modules corresponding to these functions.

In a fifth aspect, embodiments of the present disclosure provide a communication device including a processor that performs the method described in the first aspect above when the processor calls a computer program in a memory.

In a sixth aspect, embodiments of the present disclosure provide a communication device including a processor that performs the method described in the second aspect above when the processor calls a computer program in a memory.

In a seventh aspect, embodiments of the present disclosure provide a communication device including a processor and a memory in which a computer program is stored. When the computer program is executed by the processor, the communication device is caused to perform the method described in the first aspect.

In an eighth aspect, embodiments of the present disclosure provide a communication device including a processor and a memory in which a computer program is stored. When the computer program is executed by the processor, the communication device is caused to perform the method described in the second aspect.

In a ninth aspect, embodiments of the present disclosure provide a communication device including a processor and an interface circuit for receiving code instructions and transmitting them to the processor. The processor is configured to run the code instructions to cause the communication device to perform the method described in the first aspect above.

In a tenth aspect, embodiments of the present disclosure provide a communication device including a processor and an interface circuit for receiving code instructions and transmitting them to the processor. The processor is configured to run the code instructions to cause the communication device to perform the method described in the second aspect above.

In an eleventh aspect, embodiments of the present disclosure provide a communication system including the communication device described in the third aspect and the communication device described in the fourth aspect, or, alternatively, the communication device described in the fifth aspect and the communication device described in the sixth aspect, or, alternatively, the communication device described in the seventh aspect and the communication device described in the eighth aspect, or, alternatively, the communication device described in the ninth aspect and the communication device described in the tenth aspect.

In a twelfth aspect, embodiments of the present disclosure provide a computer-readable storage medium for storing instructions for use by the terminal, which, when the instructions are executed, cause the method described in the first aspect above to be implemented.

In a thirteenth aspect, embodiments of the present disclosure provide a computer-readable storage medium for storing instructions for use by the network device, which, when the instructions are executed, causes the method described in the second aspect above to be implemented.

In a fourteenth aspect, the present disclosure further provides a computer program product including a computer program that, when run on a computer, causes the computer to perform the method described in the first aspect above.

In a fifteenth aspect, the present disclosure further provides a computer program product including a computer program that, when run on a computer, causes the computer to perform the method described in the second aspect above.

In a sixteenth aspect, the present disclosure provides a chip system including at least one processor and an interface for supporting a terminal in implementing the functions involved in the first aspect, for example, determining or processing at least one of the data and information involved in the method described above. In one possible design, the chip system further includes a memory for storing the necessary computer programs and data of the terminal. The chip system may consist of a chip or may include a chip and other discrete devices.

In a seventeenth aspect, the present disclosure provides a chip system including at least one processor and an interface for supporting a network device in implementing the functions involved in the second aspect, for example, determining or processing at least one of the data and information involved in the method described above. In one possible design, the chip system further includes a memory for storing the necessary computer programs and data of the network device. The chip system may consist of a chip or may include a chip and other discrete devices.

In an eighteenth aspect, the present disclosure provides a computer program that, when run on a computer, causes the computer to perform the method described in the first aspect above.

In a nineteenth aspect, the present disclosure provides a computer program that, when run on a computer, causes the computer to perform the method described in the second aspect above.

### BRIEF DESCRIPTION OF THE DRAWINGS

In order to more clearly illustrate the technical solutions in the embodiments or background of the present disclosure, the accompanying drawings to be used in the embodiments or background of the present disclosure will be described below.
FIG. 1 is a schematic diagram of architecture of a communication system provided by embodiments of the present disclosure.
FIG. 2 is a flowchart of a method for determining a time offset provided in an embodiment of the present disclosure.
FIG. 3 is a flowchart of a method for determining a time offset provided in another embodiment of the present disclosure.
FIG. 4 is a flowchart of a method for determining a time offset provided in another embodiment of the present disclosure.
FIG. 5 is a flowchart of a method for determining a time offset provided in another embodiment of the present disclosure.
FIG. 6 is a flowchart of a method for determining a time offset provided in another embodiment of the present disclosure.
FIG. 7 is a schematic diagram of a structure of a communication device provided in an embodiment of the present disclosure.
FIG. 8 is a schematic diagram of a structure of a communication device provided in another embodiment of the present disclosure.
FIG. 9 is a schematic diagram of a structure of a chip provided in an embodiment of the present disclosure.

### DETAILED DESCRIPTION

In order to better understand a method of determining a time offset disclosed by embodiments of the present disclosure, a communication system applicable for the embodiments of the present disclosure is first described below.

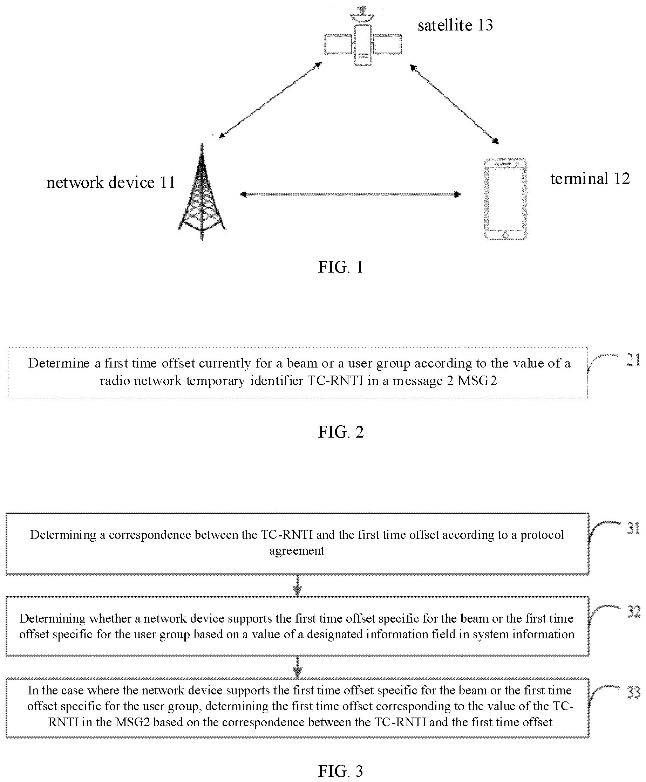

Referring to FIG. 1, FIG. 1 is a schematic diagram of architecture of a communication system provided by embodiments of the present disclosure. The communication system may include, but is not limited to, a network device, a terminal, and a satellite. The number and form of the devices shown in FIG. 1 are for example only and do not constitute a limitation of the embodiments of the present disclosure. In practical applications, two or more network devices and two or more terminals may be included. The communication system shown in FIG. 1 is exemplified by including a network device 11, a terminal 12, and a satellite 13.

It is to be noted that the technical solutions of the embodiments of the present disclosure may be applied to various communication systems, e.g., a long term evolution (LTE) system, a 5th generation (5G) mobile communication system, a 5G new radio (NR) system, or other future new types of mobile communication systems. The network device 11 in the embodiments of the present disclosure is an entity on the network side and is configured to transmit or receive signals. For example, the network device 11 may be an evolved NodeB (eNB), a transmission reception point (TRP), a next generation NodeB (gNB) in an NR system, a base station in other future mobile communication systems, or an access node in a wireless fidelity (Wi-Fi) system, etc. The embodiments of the present disclosure do not limit the specific technology and the specific device form used for the network device. The network device provided by embodiments of the present disclosure may be composed of a central unit (CU) and a distributed unit (DU), where the CU may also be referred as a control unit. The CU-DU structure may split the network device, such as the protocol layer of the base station, where some of the functions of the protocol layer are placed in the CU for centralized control, and some or all of the remaining functions of the protocol layer are placed in the DU, which is centrally controlled by the CU. The satellite provided in the embodiments of the present disclosure may be a low-orbit satellite, or it may be a high-orbit satellite, and the present disclosure is not limited thereto.

The terminal 12 in the embodiments of the present disclosure is an entity on the user side and is configured to receive or transmit signals, such as a mobile phone. The terminal may also be referred to as terminal equipment, user equipment (UE), mobile station (MS), mobile terminal (MT), and the like. The terminal may be a car with communication functions, intelligent car, mobile phone, wearable device, tablet computer (Pad), computer with wireless transceiver functions, virtual reality (VR) terminal equipment, augmented reality (AR) terminal equipment, wireless terminal equipment in industrial control, wireless terminal equipment in self-driving, wireless terminal equipment in remote medical surgery, wireless terminal equipment in smart grid, wireless terminal equipment in transportation safety, wireless terminal equipment in smart city, wireless terminal equipment in smart home, and so on. The embodiments of the present disclosure do not limit the specific technologies and specific equipment forms used for the terminals.

It is to be understood that the communication system described in the embodiments of the present disclosure is intended to more clearly illustrate the technical solutions of the embodiments of the present disclosure and does not constitute a limitation of the technical solutions provided by the embodiments of the present disclosure. Those of ordinary skill in the art may know that, with the evolution of the system architecture and the emergence of new business scenarios, the technical solutions provided by the embodiments of the present disclosure are equally applicable to similar technical problems.

The method for determining a time offset and the device for determining a time offset provided in the present disclosure are described in detail below in conjunction with the accompanying drawings.

Referring to FIG. 2, FIG. 2 is a flowchart of a method for determining a time offset provided in an embodiment of the present disclosure. The method is performed by a terminal. As shown in FIG. 2, the method may include, but is not limited to, the following steps.

Step 21, determining, based on a value of a temporary cell-radio network temporary identifier (TC-RNTI) in a message 2 (MSG2), a first time offset specific for a current beam or a first time offset specific for a user group.

The message 2 (i.e., MSG2) is a response message returned by a network device to a terminal during a random access process. The MSG2 may include a value of a temporary cell-radio network temporary identifier (i.e., TC-RNTI), a timing advance command (TA), an up-link (UL) grant, and the like, without limitation of the present disclosure.

It is to be understood that in satellite communication, each satellite may provide multiple service beams, and the transmission delay corresponding to each service beam may be different. During the high-speed movement of the satellite, due to the different coverage areas of each service beam, each cell may contain multiple service beams at the same time and information transmission between the terminal and the network device may be carried out via one or more service beams. Therefore, it is necessary to determine a first time offset corresponding to the beam currently used for transmitting information.

Alternatively, due to the large coverage area of the satellite communication, the first time offsets corresponding to different terminals within the same beam coverage area may be different, so that the first time offsets corresponding to different user groups may be further determined.

A user group is a collection of users, and the network device may divide the users as needed to determine different user groups.

Optionally, the first time offset (Koffset) may be any one of the following:
a time difference between an uplink transmission and a downlink transmission; or
a number of predefined time units between an uplink transmission and a downlink transmission.

The time difference between the uplink transmission and the downlink transmission may be an absolute time difference. For example, the time difference between the uplink transmission and the downlink transmission may be 10 ms, 5 ms, etc., and the present disclosure is not limited thereto.

Optionally, the predefined time unit may be a time slot, a micro time slot, and so on, without limitation of the present disclosure.

Optionally, the first time offset may be applied in a variety of information transmissions, e.g., a Physical Uplink Shared Channel (PUSCH) transmission for Downlink Control Information (DCI) scheduling, a transmission of Hybrid Automatic Repeat reQuest (HARQ) feedback information, and a transmission of Media Access Control (MAC) Control Element (CE), etc., and the present disclosure is not limited thereto.

By implementing the embodiment of the present disclosure, the terminal determines a first time offset specific for a current beam or a first time offset specific for a user group based on a value of a TC-RNTI in a MSG2. In this way, the terminal can determine the first time offset specific for the beam or the user group based on the value of the TC-RNTI to compensate the data transmitted between the terminal and the network device, thereby solving the problem of inaccurate adjustment of the timing relationship between the terminal and the network device due to the high-speed movement of the satellite, and ensuring the reliability of data interaction.

Referring to FIG. 3, FIG. 3 is a flowchart of a method for determining a time offset provided in an embodiment of the present disclosure. The method is performed by a terminal. As shown in FIG. 3, the method may include, but is not limited to, the following steps.

Step 31, determining a correspondence between the TC-RNTI and the first time offset according to a protocol agreement.

The correspondence between the TC-RNTI and the first time offset may be shown in Table 1.

**Table 1**

| Value of TC-RNTI | First time offset |
|---|---|
| 0001-0FFF | Koffset 1 |
| 1001-1FFF | Koffset 2 |
| ... | ... |
| FFF3-FFFD | Koffset N |

As shown in Table 1, a plurality of values of the TC-RNTI may correspond to the same first time offset.

It is to be noted that Table 1 is only a schematic illustration of the correspondence between the TC-RNTI and the first time offset, and cannot be taken as a specific limitation of the correspondence between the TC-RNTI and the first time offset in the present disclosure.

It is to be understood that each one of elements and each one of correspondences in Table 1 exists independently. These elements and correspondences are schematically listed in the same table, but it does not mean that all elements and all correspondences in the table must exist at the same time as shown in Table 1. A value of each element and each correspondence is independent of the value of any other element or any other correspondence in Table 1. Therefore, it is to be understood by those skilled in the art that the value of each element and each correspondence in that Table 1 is an independent embodiment.

Step 32, determining whether a network device supports the first time offset specific for the beam or the first time offset specific for the user group based on a value of a designated information field in system information.

The system information is information sent by the network device to the terminal. The network device may indicate to the terminal in the system information whether it supports the first time offset specific for the beam or the first time offset specific for the user group.

The number of bits included in the designated information field may be set as required. For example, if the designated information field includes 1 bit, this bit with a value of "0" may indicate that the network device does not support the first time offset specific for the beam or the first time offset specific for the user group; and this bit with a value of "1" may indicate that the network device supports the first time offset specific for the beam or the first time offset specific for the user group. Alternatively, if the designated information field includes two bits, these bits with a value of "00" may indicate that the network device does not support the first time offset specific for the beam and the user group; these bits with a value of "01" may indicate that the network device supports the first time offset specific for the beam; these bits with a value of "10" may indicate that the network device supports the first time offset specific for the user group; and these bits with a value of "11" may indicate that the network device supports the first time offset specific for the beam and the user group, and so on, and the present disclosure is not limited thereto.

Step 33, in the case where the network device supports the first time offset specific for the beam or the first time offset specific for the user group, determining the first time offset corresponding to the value of the TC-RNTI in the MSG2 based on the correspondence between the TC-RNTI and the first time offset.

It is to be understood that in the case where the network device supports the first time offset specific for the beam or the first time offset specific for the user group, the first time offset specific for the current beam or the first time offset specific for the user group is then determined according to the value of the TC-RNTI in the MSG2. In this way, the terminal does not need to determine the first time offset corresponding to the value of the TC-RNTI every time it receives the MSG2, but only determines the first time offset according to the correspondence between the TC-RNTI and the first time offset when the network device supports the first time offset specific for the beam or the first time offset specific for the user group, which saves the overhead of the terminal and reduces the waste of resources.

By implementing the embodiment of the present disclosure, the terminal first determines a correspondence between a TC-RNTI and a first time offset according to a protocol agreement or by receiving a signaling sent from the base station, then determines whether the network device supports the first time offset specific for the beam or the first time offset specific for the user group according to a value of a designated information field in system information, and finally determines the first time offset corresponding to the value of the TC-RNTI in the MSG2 according to the correspondence between the TC-RNTI and the first time offset in the case where the network device supports the first time offset specific for the beam or the first time offset specific for the user group. In this way, the terminal device determines the first time offset according to the value of TC-RNTI in the MSG2 when the network device supports the first time offset specific for the beam or the first time offset specific for the user group, which not only solves the problem of inaccurate adjustment of transmission delay between the terminal and the network device due to high-speed movement of the satellite and ensures the reliability of data interaction, but also saves the overhead of the terminal and reduces the waste of resources.

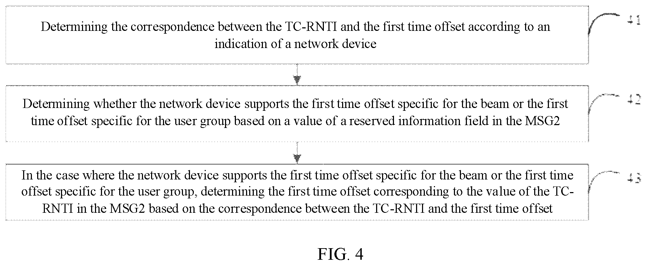

Referring to FIG. 4, FIG. 4 is a flowchart of a method for determining a time offset provided in an embodiment of the present disclosure. The method is performed by a terminal. As shown in FIG. 4, the method may include, but is not limited to, the following steps.

Step 41, determining the correspondence between the TC-RNTI and the first time offset according to an indication of a network device.

Step 42, determining whether the network device supports the first time offset specific for the beam or the first time offset specific for the user group based on a value of a reserved information field in the MSG2.

The number of bits included in the reserved information field may be set as required. For example, if the reserved information field includes 1 bit, this bit with a value of "0" may indicate that the network device does not support the first time offset specific for the beam or the first time offset specific for the user group; and this bit with a value of "1" may indicate that the network device supports the first time offset specific for the beam or the first time offset specific for the user group. Alternatively, if the reserved information field includes two bits, these bits with a value of "00" may indicate that the network device does not support the first time offset specific for the beam and the user group; these bits with a value of "01" may indicate that the network device supports the first time offset specific for the beam; these bits with a value of "10" may indicate that the network device supports the first time offset specific for the user group; and these bits with a value of "11" may indicate that the network device supports the first time offset specific for the beam and the user group, and so on, and the present disclosure is not limited thereto.

Optionally, the reserved information field in the MSG2 may be at a predefined position in the entire information field of the MSG2, such as at a first information bit position in the entire information field, to facilitate the terminal to determine whether the network device supports the first time offset specific for the beam or the first time offset specific for the user group according to the value of the reserved information field, and the present disclosure is not limited thereto.

It is to be understood that the network device directly uses the information field reserved in the MSG2 to transmit to the terminal whether it supports the first time offset specific for the beam or the first time offset specific for the user group, without using other information for transmission, which reduces the waste of resources. Moreover, the terminal only needs to determine whether the network device supports the first time offset specific for the beam or the first time offset specific for the user group after receiving the MSG2, and after determining that the network device supports the first time offset specific for the beam or the first time offset specific for the user group, the terminal determines the first time offset corresponding to the value of the TC-RNTI in the MSG2, which further saves the overhead of the terminal.

Step 43, in the case where the network device supports the first time offset specific for the beam or the first time offset specific for the user group, determining the first time offset corresponding to the value of the TC-RNTI in the MSG2 based on the correspondence between the TC-RNTI and the first time offset.

The specific form for implementation of step 43 can be referred to the detailed description in various other embodiments in the present disclosure, and will not be repeated in detail herein.

By implementing the embodiments of the present disclosure, the terminal first determines a correspondence between a TC-RNTI and a first time offset according to an indication of the network device, then determines whether the network device supports the first time offset specific for the beam or the first time offset specific for the user group according to a value of a reserved information field in the MSG2, and finally determines the first time offset corresponding to the value of the TC-RNTI in the MSG2 according to the correspondence between the TC-RNTI and the first time offset in the case where the network device supports the first time offset specific for the beam or the first time offset specific for the user group. In this way, the terminal device determines the first time offset according to the value of TC-RNTI in the MSG2 when the network device supports the first time offset specific for the beam or the first time offset specific for the user group, which not only solves the problem of transmission delay between the terminal and the network device and ensures the reliability of data interaction, but also saves the overhead of the terminal and reduces the waste of resources.

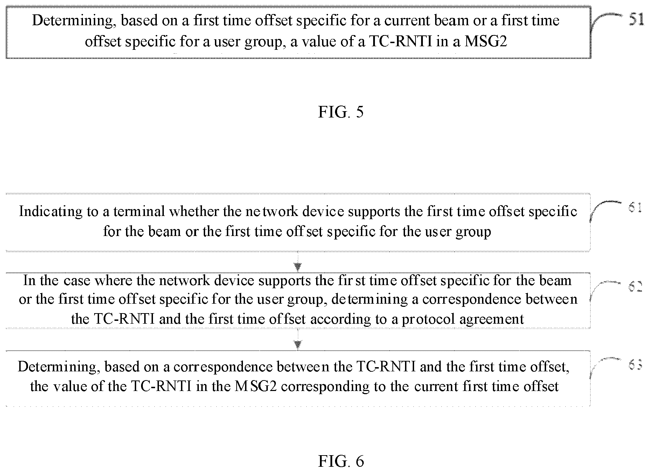

Referring to FIG. 5, FIG. 5 is a flowchart of a method for determining a time offset provided in an embodiment of the present disclosure. The method is performed by a network device. As shown in FIG. 5, the method may include, but is not limited to, the following steps.

Step 51, determining, based on a first time offset specific for a current beam or a first time offset specific for a user group, a value of a TC-RNTI in a MSG2.

The MSG2 is a response message returned by a network device to a terminal during a random access process. The MSG2 may include a value of a TC-RNTI, a timing advance command (TA), an up-link (UL) grant, and the like, without limitation of the present disclosure.

A user group is a collection of users, and the network device may divide the users as needed to determine different user groups.

Optionally, the first time offset (Koffset) may be any one of the following:
a time difference between an uplink transmission and a downlink transmission; or
a number of predefined time units between an uplink transmission and a downlink transmission.

The time difference between the uplink transmission and the downlink transmission may be an absolute time difference. For example, the time difference between the uplink transmission and the downlink transmission may be 10 ms, 5 ms, etc., and the present disclosure is not limited thereto.

Optionally, the predefined time unit may be a time slot, a micro time slot, and so on, without limitation of the present disclosure.

Optionally, the first time offset may be applied in a variety of information transmissions, e.g., a Physical Uplink Shared Channel (PUSCH) transmission for Downlink Control Information (DCI) scheduling, a transmission of Hybrid Automatic Repeat reQuest (HARQ) feedback information, and a transmission of Media Access Control (MAC) Control Element (CE), etc., and the present disclosure is not limited thereto.

By implementing the embodiment of the present disclosure, the network device determines a value of the TC-RNTI in the MSG2 based on the first time offset specific for the current beam or the first time offset specific for the user group. In this way, the network device may determine the value of the TC-RNTI based on the first time offset specific for the current beam or the first time offset specific for the user group, so that the terminal may determine the first time offset based on the value of the TC-RNTI in the MSG2 to compensate the data transmitted between the terminal and the network device, thereby solving the problem of inaccurate adjustment of timing relationship between the terminal and the network device due to high-speed satellite movement, and ensuring the reliability of data interaction.

Referring to FIG. 6, FIG. 6 is a flowchart of a method for determining a time offset provided in an embodiment of the present disclosure. The method is performed by a network device. As shown in FIG. 6, the method may include, but is not limited to, the following steps.

Step 61, indicating to a terminal whether the network device supports the first time offset specific for the beam or the first time offset specific for the user group.

Optionally, the network device may indicate to the terminal whether the network device supports the first time offset specific for the beam or the first time offset specific for the user group through a designated information field in system information.

The number of bits included in the designated information field may be set as required. For example, if the designated information field includes 1 bit, this bit with a value of "0" may indicate that the network device does not support the first time offset specific for the beam or the first time offset specific for the user group; and this bit with a value of "1" may indicate that the network device supports the first time offset specific for the beam or the first time offset specific for the user group. Alternatively, if the designated information field includes two bits, these bits with a value of "00" may indicate that the network device does not support the first time offset specific for the beam and the user group; these bits with a value of "01" may indicate that the network device supports the first time offset specific for the beam; these bits with a value of "10" may indicate that the network device supports the first time offset specific for the user group; and these bits with a value of "11" may indicate that the network device supports the first time offset specific for the beam and the user group, and so on, and the present disclosure is not limited thereto.

Optionally, the network device may also indicate to the terminal whether the network device supports the first time offset specific for the beam or the first time offset specific for the user group through a reserved information field in the MSG2.

The number of bits included in the reserved information field may be set as required. For example, if the reserved information field includes 1 bit, this bit with a value of "0" may indicate that the network device does not support the first time offset specific for the beam or the first time offset specific for the user group; and this bit with a value of "1" may indicate that the network device supports the first time offset specific for the beam or the first time offset specific for the user group. Alternatively, if the reserved information field includes two bits, these bits with a value of "00" may indicate that the network device does not support the first time offset specific for the beam and the user group; these bits with a value of "01" may indicate that the network device supports the first time offset specific for the beam; these bits with a value of "10" may indicate that the network device supports the first time offset specific for the user group; and these bits with a value of "11" may indicate that the network device supports the first time offset specific for the beam and the user group, and so on, and the present disclosure is not limited thereto.

Step 62, in the case where the network device supports the first time offset specific for the beam or the first time offset specific for the user group, determining a correspondence between the TC-RNTI and the first time offset according to a protocol agreement.

The correspondence between the TC-RNTI and the first time offset may be shown in Table 1, and will not be repeated in detail here.

Step 63, determining, based on a correspondence between the TC-RNTI and the first time offset, the value of the TC-RNTI in the MSG2 corresponding to the current first time offset.

It is to be understood that the network device determines, only in the case where the network device itself supports the first time offset specific for the beam or the first time offset specific for the user group, the correspondence between the TC-RNTI and the first time offset according to the protocol agreement, and thus determines the value of the TC-RNTI in the MSG2 corresponding to the current first time offset. In this way, there is no need to determine the value of the TC-RNTI corresponding to each first time offset in the MSG2, which saves the overhead of the network device.

By implementing the embodiment of the present disclosure, the network device first indicates to the terminal whether the network device supports the first time offset specific for the beam or the first time offset specific for the user group, and thereafter, in the case where the network device supports the first time offset specific for the beam or the first time offset specific for the user group, determines, according to a protocol agreement, a correspondence between the TC-RNTI and the first time offset, and finally, according to the correspondence between the TC-RNTI and the first time offset, determines a value of the TC-RNTI in the MSG2 corresponding to the current first time offset. In this way, when the network device supports the first time offset specific for a beam or the first time offset specific for a user group, the value of the TC-RNTI is determined according to the first time offset, so that the terminal can determine the first time offset according to the value of the TC-RNTI in the MSG2, which not only solves the problem of inaccurate adjustment of the timing relationship between the terminal and the network device due to the high-speed satellite movement, and ensures the reliability of data interaction, but also saves the overhead of network device and reduces the waste of resources.

In the above-described embodiments provided in the present disclosure, the methods provided in the embodiments of the present disclosure are described from the perspectives of a network device and a terminal, respectively. In order to implement each of the functions in the methods provided by the above embodiments of the present disclosure, the network device and the terminal may include a hardware structure, a software module, and implement each of the above functions in the form of a hardware structure, a software module, or a combination of a hardware structure and a software module. A function of each of the above functions may be performed in the form of a hardware structure, a software module, or a combination of a hardware structure and a software module.

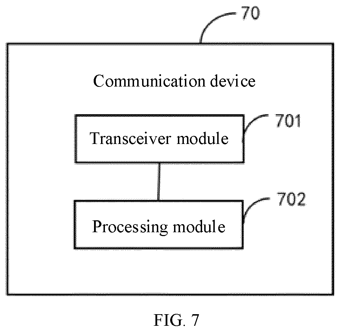

Referring to FIG. 7, it is a schematic diagram of a structure of a communication device 70 provided in an embodiment of the present disclosure. The communication device 70 shown in FIG. 7 may include a processing module 701 and a transceiver module 702.

The transceiver module 702 may include a sending module and/or a receiving module. The sending module is configured to implement the function of sending. The receiving module is configured to implement the function of receiving. The transceiver module 702 can implement the function of sending and/or the function of receiving.

It is to be understood that the communication device 70 may be a terminal, a device in a terminal, or a device capable of being used in conjunction with a terminal.

The communication device 70, on the terminal side, includes:
a processing module 701 configured to determine, based on a value of a temporary cell-radio network temporary identifier (TC-RNTI) in a message 2 (MSG2), a first time offset specific for a current beam or a first time offset specific for a user group.

Optionally, the processing module 701 is specifically configured to:
determine, based on a correspondence between the TC-RNTI and the first time offset, the first time offset corresponding to the value of the TC-RNTI in the MSG2.

Optionally, the processing module 701 is specifically configured to:
determine the correspondence between the TC-RNTI and the first time offset according to a protocol agreement; or
determine the correspondence between the TC-RNTI and the first time offset according to an indication of a network device.

Optionally, the processing module 701 is specifically configured to:
determine whether a network device supports the first time offset specific for the beam or the first time offset specific for the user group.

Optionally, the processing module 701 is specifically configured to:
determine, based on a value of a designated information field in system information, whether the network device supports the first time offset specific for the beam or the first time offset specific for the user group; or
determine, based on a value of a reserved information field in the MSG2, whether the network device supports the first time offset specific for the beam or the first time offset specific for the user group.

Optionally, the first time offset is any one of:
a time difference between an uplink transmission and a downlink transmission; or
a number of predefined time units between an uplink transmission and a downlink transmission.

Through the communication device provided in the present disclosure, the terminal determines a first time offset specific for a current beam or a first time offset specific for a user group based on a value of a TC-RNTI in a MSG2. In this way, the terminal can determine the first time offset specific for the beam or the first time offset specific for the user group based on the value of the TC-RNTI to compensate the data transmitted between the terminal and the network device, thereby solving the problem of inaccurate adjustment of the timing relationship between the terminal and the network device due to the high-speed movement of the satellite, and ensuring the reliability of data interaction.

It is to be understood that the communication device 70 may be a network device, a device in a network device, or a device capable of being used in conjunction with a network device.

The communication device 70, on the network device side, includes:
a processing module 701 configured to determine, based on a first time offset specific for a current beam or a first time offset specific for a user group, a value of a temporary cell-radio network temporary identifier (TC-RNTI) in a message 2 (MSG2).

Optionally, the processing module 701 is specifically configured to:
determine, based on a correspondence between the TC-RNTI and the first time offset, the value of the TC-RNTI in the MSG2 corresponding to the current first time offset.

Optionally, the processing module 701 is specifically configured to:
determine the correspondence between the TC-RNTI and the first time offset according to a protocol agreement.

Optionally, the processing module 701 is specifically configured to:
indicate to a terminal whether the network device supports the first time offset specific for the beam or the first time offset specific for the user group.

Optionally, the processing module 701 is specifically configured to:
indicate, through a designated information field in system information, to the terminal whether the network device supports the first time offset specific for the beam or the first time offset specific for the user group; or
indicate, through a reserved information field in the MSG2, to the terminal whether the network device supports the first time offset specific for the beam or the first time offset specific for the user group.

Optionally, the first time offset is any one of:
a time difference between an uplink transmission and a downlink transmission; or
a number of predefined time units between an uplink transmission and a downlink transmission.

Through the communication device provided in the present disclosure, the network device determines a value of the TC-RNTI in the MSG2 based on the first time offset specific for the current beam or the first time offset specific for the user group. In this way, the network device may determine the value of the TC-RNTI based on the first time offset specific for the current beam or the first time offset specific for the user group, so that the terminal may determine the first time offset based on the value of the TC-RNTI in the MSG2 to compensate the data transmitted between the terminal and the network device, thereby solving the problem of inaccurate adjustment of timing relationship between the terminal and the network device due to high-speed satellite movement, and ensuring the reliability of data interaction.

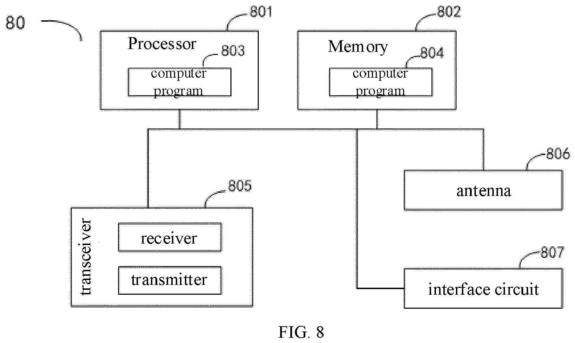

Referring to FIG. 8, FIG. 8 is a schematic diagram of a structure of another communication device 80 provided in an embodiment of the present disclosure. The communication device 80 may be a network device, or a terminal, or it may be a chip, a chip system, or a processor, etc. that supports the network device to implement the above methods, or it may be a chip, a chip system, or a processor, etc. that supports the terminal to implement the above methods. The device may be used to implement the method described in the above method embodiments. For details, please refer to the description in the above method embodiments.

The communication device 80 may include one or more processors 801. The processor 801 may be a general-purpose processor or a specialized processor, etc. For example, it may be a baseband processor or a central processor. The baseband processor may be used for processing communication protocols and communication data. The central processor may be used for controlling the communication device (e.g., a base station, a baseband chip, a terminal, a terminal chip, DU or CU, etc.), executing a computer program, and processing data of the computer program.

Optionally, one or more memories 802 may also be included in the communication device 80, on which a computer program 804 may be stored. The processor 801 executes the computer program 804 to cause the communication device 80 to perform the method described in the above method embodiments. Optionally, data may also be stored in the memory 802. The communication device 80 and the memory 802 may be provided separately or may be integrated together.

Optionally, the communication device 80 may further include a transceiver 805 and an antenna 806. The transceiver 805 may be referred to as a receiving and sending unit, a receiving and sending machine, or a receiving and sending circuit, etc., and is configured to implement transceiver functions. The transceiver 805 may include a receiver and a transmitter. The receiver may be referred to as a receiving machine or a receiving circuit, etc., and is configured to implement the function of receiving. The transmitter may be referred to as a sending machine or a sending circuit, etc., and is configured to implement the function of sending.

Optionally, one or more interface circuits 807 may also be included in the communication device 80. The interface circuit 807 is configured to receive code instructions and transmit them to the processor 801. The processor 801 runs the code instructions to cause the communication device 80 to perform the method described in the above method embodiments.

The communication device 80 is a terminal, and the processor 801 is configured to perform step 21 in FIG. 2, steps 31, 32, and 33 in FIG. 3, and steps 41, 42, and 43 in FIG. 4, etc.

The communication device 80 is a network device, and the processor 801 is configured to perform step 51 in FIG. 5, and steps 61, 62, and 63 in FIG. 6, etc.

In one implementation, the processor 801 may include a transceiver configured to implement the functions of receiving and sending. The transceiver may be, for example, a receiving and sending circuit, or an interface, or an interface circuit. The receiving and sending circuit, the interface, or the interface circuit configured to implement the functions of receiving and sending may be separate or may be integrated together. The receiving and sending circuit, the interface, or the interface circuit may be configured for code/data reading and writing, or, the receiving and sending circuit, the interface, or the interface circuit may be used for signal transmission or delivery.

In one implementation, the processor 801 may store a computer program 803, which runs on the processor 801 and may cause the communication device 80 to perform the method described in the above method embodiments. The computer program 803 may be embedded in the processor 801, in which case the processor 801 may be implemented by hardware.

In one implementation, the communication device 80 may include a circuit which may implement the functions of sending or receiving or communicating in the above method embodiments. The processor and transceiver described in the present disclosure may be implemented on an integrated circuit (IC), analog IC, radio frequency integrated circuit (RFIC), mixed signal IC, application specific integrated circuit (ASIC), printed circuit board (PCB), or electronic equipment, etc. The processor and transceiver may also be fabricated using a variety of IC process technologies, such as complementary metal oxide semiconductor (CMOS), N-Metal-Oxide-Semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the description of the above embodiments may be a network device or a terminal, but the scope of the communication device described in the present disclosure is not limited thereto, and the structure of the communication device may not be limited by FIG. 11. The communication device may be a stand-alone device or may be part of a larger device. For example the described communication device may be:
(1) A stand-alone integrated circuit IC, or chip, or, system on chip or subsystem;
(2) A collection of one or more Ics. Optionally, the collection of Ics may also include a storage component configured to store data and computer programs;
(3) An ASIC, such as a modem;
(4) A module that can be embedded in other equipment;
(5) A receiver, terminal, intelligent terminal, cellular phone, wireless device, handheld device, mobile unit, in-vehicle device, network device, cloud device, artificial intelligence device, and the like;
(6) Others, etc.

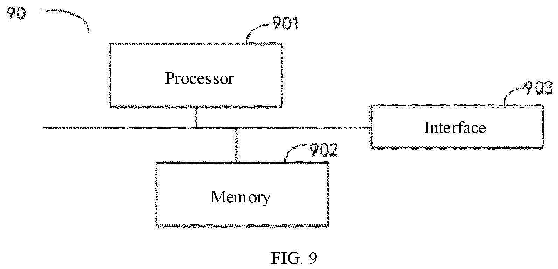

For the case where the communication device may be a chip or a system on a chip, please refer to a schematic diagram of a structure of the chip shown in FIG. 9. The chip shown in FIG. 9 includes a processor 901 and an interface 902. There may be one or more processors 901. There may be one or more interfaces 902.

For the case where the chip is configured to implement the functions of the terminal in the embodiments of the present disclosure:
the processor 901 is configured to perform step 21 of FIG. 2, steps 31, 32, and 33 of FIG. 3, and steps 41, 42, and 43 of FIG. 4, etc.

For the case where the chip is configured to implement the functions of the network device in the embodiments of the present disclosure:
the processor 901 is configured to perform step 51 of FIG. 5, and steps 61, 62, and 63 of FIG. 6, etc.

Optionally, the chip further includes a memory 903. The memory 903 is configured to store necessary computer programs and data.

Those skilled in the art may also understand that the various illustrative logical blocks and steps listed in the embodiments of the present disclosure can be implemented by electronic hardware, computer software, or a combination thereof. Whether such function is implemented in hardware or software depends on the specific application and overall system design requirements. Those skilled in the art may use various methods to implement the described functions for each specific application, but such implementation should not be understood as beyond the scope of protection of the embodiments of the present disclosure.

Embodiments of the present disclosure also provide a communication system including a communication device as a terminal and a communication device as a network device in the above embodiment of FIG. 7, or, alternatively, the system includes a communication device as a terminal and a communication device as a network device in the above embodiment of FIG. 8.

The present disclosure also provides a computer-readable storage medium having stored thereon instructions which, when executed by a computer, cause the functions of any of the method embodiments described above to be implemented.

The present disclosure also provides a computer program product that, when executed by a computer, causes the functions of any of the method embodiments described above to be implemented.

The above embodiments may be implemented in whole or in part by software, hardware, firmware, or any combination thereof. When the above embodiments are implemented using software, they may be implemented, in whole or in part, in the form of a computer program product. The computer program product includes one or more computer programs. When the computer program is loaded and executed on a computer, the processes or functions described in accordance with embodiments of the present disclosure are generated in whole or in part. The computer may be a general-purpose computer, a specialized computer, a computer network, or other programmable device. The computer program may be stored in a computer-readable storage medium or transmitted from one computer-readable storage medium to another computer-readable storage medium. For example, the computer program may be transmitted from a web site, computer, server, or data center via a wired (e.g., coaxial cable, fiber optic, digital subscriber line (DSL)) or wireless (e.g., infrared, wireless, microwave, etc.) to another website site, computer, server, or data center. The computer-readable storage medium may be any available medium that can be accessed by a computer or a data storage device such as a server, data center, etc. that contains one or more available media integrated therein. The available medium may be a magnetic medium (e.g., floppy disk, hard disk, tape), an optical medium (e.g., a high-density digital video disc (DVD)), or a semiconductor medium (e.g., a solid state disk (SSD)), etc.

A person of ordinary skill in the art may understand that the first, second, and other various numerical numbers involved in the present disclosure are only described for the convenience of differentiation, and are not used to limit the scope of the embodiments of the present disclosure, and also indicate the order of precedence.

The term "at least one of' in the present disclosure may also be described as "one or more" and may refer to two, three, four, or more, without limitation of the present disclosure. In the embodiments of the present disclosure, for one type of technical features, this type of technical features are distinguished by "first", "second", "third", "A", "B", "C", and "D", etc., and there is no order of precedence or magnitude of the technical features described by "first", "second", "third", "A", "B", "C" and "D".

The correspondences shown in the tables in the present disclosure may be configured or may be predefined. The values of the information in the tables are merely examples and may be configured to other values, which are not limited by the present disclosure. When configuring the correspondence between the information and the respective parameters, it is not necessarily required that all of the correspondences illustrated in the tables must be configured. For example, the correspondences illustrated in certain rows of the tables in the present disclosure may also not be configured. For example, the above tables may be appropriately transformed or adjusted, such as splitting, merging, and other modifications. The names of the parameters shown in the headings in the above tables may also be other names understandable for the communication device, and the values or representations of the parameters thereof may also be other values or representations understandable for the communication device. The above tables may also be implemented using other data structures, such as arrays, queues, containers, stacks, linear tables, pointers, linked lists, trees, graphs, structures, classes, heaps, hash tables, or scatter tables.

The term "predefined" in the present disclosure may be understood as "defined", "pre-defined", "stored", "pre-stored", "pre-negotiated", "pre-configured", "hard-coded", or "pre-fired".

Those of ordinary skill in the art may realize that the units and algorithmic steps of the various examples described in conjunction with the embodiments disclosed herein are capable of being implemented in electronic hardware, or a combination of computer software and electronic hardware. Whether these functions are performed in hardware or software depends on the particular application and design constraints of the technical solution. The skilled professional may use different methods to implement the described functions for each particular application, but such implementations should not be considered to be beyond the scope of the present disclosure.

It is clearly understood by those skilled in the art to which it belongs that, for the convenience and brevity of the description, the specific working processes of the above systems, devices, and units can be referred to the corresponding processes in the above method embodiments, and will not be repeated herein.

The above are only specific embodiments of the present disclosure, but the scope of protection of the present disclosure is not limited thereto. Any changes or substitutions that can be easily conceived by any person skilled in the art who is familiar with the technical field within the technical scope disclosed in the present disclosure shall be covered by the scope of protection of the present disclosure. Therefore, the scope of protection of the present disclosure shall be subject to the scope of protection of the claims.

## Claims

1. A method for determining a time offset, performed by a terminal, the method comprising:
determining, based on a value of a temporary cell-radio network temporary identifier, TC-RNTI, in a message 2, MSG2, a first time offset specific for a current beam or a first time offset specific for a user group.

2. The method of claim 1, wherein determining the first time offset specific for the current beam or the first time offset specific for the user group based on the value of the TC-RNTI in the MSG2 comprises:
determining, based on a correspondence between the TC-RNTI and the first time offset, the first time offset corresponding to the value of the TC-RNTI in the MSG2.

3. The method of claim 2, wherein the determining based on the correspondence between the TC-RNTI and the first time offset comprises:
determining the correspondence between the TC-RNTI and the first time offset according to a protocol agreement; or
determining the correspondence between the TC-RNTI and the first time offset according to an indication of a network device.

4. The method of claim 1, further comprising:
determining whether a network device supports the first time offset specific for the beam or the first time offset specific for the user group.

5. The method of claim 4, wherein determining whether the network device supports the first time offset specific for the beam or the first time offset specific for the user group comprises:
determining, based on a value of a designated information field in system information, whether the network device supports the first time offset specific for the beam or the first time offset specific for the user group; or
determining, based on a value of a reserved information field in the MSG2, whether the network device supports the first time offset specific for the beam or the first time offset specific for the user group.

6. The method of any one of claims 1 to 5, wherein the first time offset is any one of:
a time difference between an uplink transmission and a downlink transmission; or
a number of predefined time units between an uplink transmission and a downlink transmission.

7. A method for determining a time offset, performed by a network device, the method comprising:
determining, based on a first time offset specific for a current beam or a first time offset specific for a user group, a value of a temporary cell-radio network temporary identifier, TC-RNTI, in a message 2, MSG2.

8. The method of claim 7, wherein determining the value of the TC-RNTI in the MSG2 based on the first time offset specific for the current beam or the first time offset specific for the user group comprises:
determining, based on a correspondence between the TC-RNTI and the first time offset, the value of the TC-RNTI in the MSG2 corresponding to the current first time offset.

9. The method of claim 8, wherein the determining based on the correspondence between the TC-RNTI and the first time offset, comprises:
determining the correspondence between the TC-RNTI and the first time offset according to a protocol agreement.

10. The method of claim 7, further comprising:
indicating to a terminal whether the network device supports the first time offset specific for the beam or the first time offset specific for the user group.

11. The method of claim 10, wherein indicating to the terminal whether the network device supports the first time offset specific for the beam or the first time offset specific for the user group comprises:
indicating, through a designated information field in system information, to the terminal whether the network device supports the first time offset specific for the beam or the first time offset specific for the user group; or
indicating, through a reserved information field in the MSG2, to the terminal whether the network device supports the first time offset specific for the beam or the first time offset specific for the user group.

12. The method of any one of claims 7 to 11, wherein the first time offset is any one of:
a time difference between an uplink transmission and a downlink transmission; or
a number of predefined time units between an uplink transmission and a downlink transmission.

13. A communication device, comprising:
a processing module configured to determine, based on a value of a temporary cell-radio network temporary identifier, TC-RNTI, in a message 2, MSG2, a first time offset specific for a current beam or a first time offset specific for a user group.

14. The device of claim 13, wherein the processing module is specifically configured to:
determine, based on a correspondence between the TC-RNTI and the first time offset, the first time offset corresponding to the value of the TC-RNTI in the MSG2.

15. The device of claim 14, wherein the processing module is further configured to:
determine the correspondence between the TC-RNTI and the first time offset according to a protocol agreement; or
determine the correspondence between the TC-RNTI and the first time offset according to an indication of a network device.

16. The device of claim 15, wherein the processing module is further configured to:
determine whether a network device supports the first time offset specific for the beam or the first time offset specific for the user group.

17. The device of claim 16, wherein the processing module is further configured to:
determine, based on a value of a designated information field in system information, whether the network device supports the first time offset specific for the beam or the first time offset specific for the user group; or
determine, based on a value of a reserved information field in the MSG2, whether the network device supports the first time offset specific for the beam or the first time offset specific for the user group.

18. The device of any one of claims 13 to 17, wherein the first time offset is any one of:
a time difference between an uplink transmission and a downlink transmission; or
a number of predefined time units between an uplink transmission and a downlink transmission.

19. A communication device, comprising:
a processing module configured to determine, based on a first time offset specific for a current beam or a first time offset specific for a user group, a value of a temporary cell-radio network temporary identifier, TC-RNTI, in a message 2, MSG2.

20. The device of claim 19, wherein the processing module is specifically configured to:
determine, based on a correspondence between the TC-RNTI and the first time offset, the value of the TC-RNTI in the MSG2 corresponding to the current first time offset.

21. The device of claim 20, wherein the processing module is further configured to:
determine the correspondence between the TC-RNTI and the first time offset according to a protocol agreement.

22. The device of claim 19, wherein the processing module is further configured to:
indicate to a terminal whether the network device supports the first time offset specific for the beam or the first time offset specific for the user group.

23. The device of claim 22, wherein the processing module is further configured to:
indicate, through a designated information field in system information, to the terminal whether the network device supports the first time offset specific for the beam or the first time offset specific for the user group; or
indicate, through a reserved information field in the MSG2, to the terminal whether the network device supports the first time offset specific for the beam or the first time offset specific for the user group.

24. The device of any one of claims 19 to 23, wherein the first time offset is any one of:
a time difference between an uplink transmission and a downlink transmission; or
a number of predefined time units between an uplink transmission and a downlink transmission.

25. A communication device, comprising a processor and a memory, wherein the memory stores a computer program; and the processor executes the computer program stored in the memory to cause the device to perform the method of any one of claims 1 to 6.

26. A communication device, comprising a processor and a memory, wherein the memory stores a computer program; and the processor executes the computer program stored in the memory to cause the device to perform the method of any one of claims 7 to 12.

27. A communication device, comprising a processor and an interface circuit, wherein
the interface circuit is configured to receive code instructions and transmit the code instructions to the processor; and
the processor is configured to run the code instructions to perform the method of any one of claims 1 to 6.

28. A communication device, comprising a processor and an interface circuit, wherein
the interface circuit is configured to receive code instructions and transmit the code instructions to the processor; and
the processor is configured to run the code instructions to perform the method of any one of claims 7 to 12.

29. A computer-readable storage medium, configured to store instructions, wherein when the instructions are executed, the instructions cause the method of any one of claims 1 to 6 to be implemented.

30. A computer-readable storage medium, configured to store instructions, wherein when the instructions are executed, the instructions cause the method of any one of claims 7 to 12 to be implemented.
